# EUROPEAN PATENT SPECIFICATION

(11) **EP 1 363 770 B1**
(45) Date of publication and mention of the grant of the patent: **04.10.2006**
(21) Application number: 02700257.5
(22) Date of filing: 20.02.2002
(51) Int. Cl.: B32B 21/00

(54) **METHOD AND MACHINE FOR EMBOSSING COATED SURFACES OF PANELS OR CLADDING FILMS, AND ELEMENTS OBTAINED WITH THE METHOD**
VEFAHREN UND VORRICHTUNG ZUM PRÄGEN VON BESCHICHTETEN SCHEIBEN- ODER VERKLEIDUNGSFILMOBERFLÄCHEN, UND NACH DIESEM VERFAHREN ERHALTENE ELEMENTE
PROCEDE ET MACHINE POUR GAUFRER DES SURFACES DE PANNEAUX OU DE FILMS DE PLACAGE REVETUES ET ELEMENTS OBTENUS PAR CE PROCEDE

(30) Priority: 23.02.2001 IT PS20010006
(43) Date of publication of application: 26.11.2003
(73) Proprietor: Canti & Figli S.R.L., 61100 Pesaro (IT)
(72) Inventor: CANTI, Max, I-61012 Gradara (IT)
(74) Representative: Negrini, Elena
(86) International application number: PCT/EP2002/001780
(87) International publication number: WO 2002/068189

(56) References cited:
- WO-A-90/15673
- WO-A-99/61168
- DE-A- 4 421 559
- US-A- 5 425 848
- US-A- 5 773 126

## Description

### Technical Field

The present invention relates to a. method that allows to provide embossings in various shapes and sizes on UV-coated surfaces (i.e., surfaces sensitive to ultraviolet light) of panels and the like or of cladding films. The method also allows to recondition the surfaces and edges of panels made of chipboard or other low-value materials, in order to prepare them for transfer printing or for enhancement with papers or other products in thin rolls. The invention also comprises the elements obtained with such method.

### Background Art

Coatings have long been commonly used which polymerize and harden due to the effect of exposure to ultraviolet (UV) light. The surfaces thus treated have a smooth finish of 0 to 100 gloss. It is possible to obtain more or less rough surfaces by adding foreign objects, such as microspheres or non-orientated granules.

The resulting rough surfaces cannot receive designs at will, since the introduced foreign objects are not orientated. Moreover, such surfaces are delicate, because the added granules can be easily removed due to friction of other bodies. Document WO 9015673A discloses a method for obtaining embossing on coated surfaces of substrates.

### Disclosure of the Invention

The aim of the present invention is to obtain, on a coated surface, orientated embossings which reproduce fancy patterns, for example pores or finishes such as wood of various essences (ash, oak or others) and finishes of the opaque, wax, peach, crystal type, which up to now have been a prerogative of HPL or CPL plastic laminates, of melamine faced components, or of polymeric materials obtained by calendering.

An object of the invention is to recondition the surfaces and edges of panels of chipboard or other low-value materials in order to prepare them for transfer printing or for enhancement with papers or other products in thin rolls.

The method is performed by coating the surface to be treated with a UV coating and by coupling on the fresh coating a matrix release paper or the like, which is transparent or not fully opacified, so as to allow ultraviolet light to pass, allowing partial hardening of the photochemical coating or its total hardening in the case of transparent matrices, so that the matrix release paper or the like can be removed clean, leaving the intended impression on the surface. Then total polymerization of the coating is performed, exposing the uncovered surface to further irradiation: this produces a surface that has embossings orientated so as to reproduce any design, contains no foreign objects and is therefore particularly resistant.

The method can be applied to panels or rigid elements in general, or to thin sheets for cladding.

The matrix release paper or other product can be rewound in roll form and used several times, for as long as it is possible to remove it perfectly clean.

### Brief description of the drawings

The invention is now described in detail with reference to the accompanying drawings, which illustrate only by way of example some possible embodiments thereof.
Figure 1 is a schematic view of an apparatus for producing embossed surfaces on coated panels, according to the present invention.
Figure 2 is a view of an apparatus for forming embossed surfaces on films in rolls, according to the invention.
Figure 3 is a view of an apparatus for treating edges of panels or the like, according to the invention.
Figures 4, 5, 6, and 7 are views of further embodiments of the apparatus for performing the method of the invention.

### Ways to carrying out the Invention

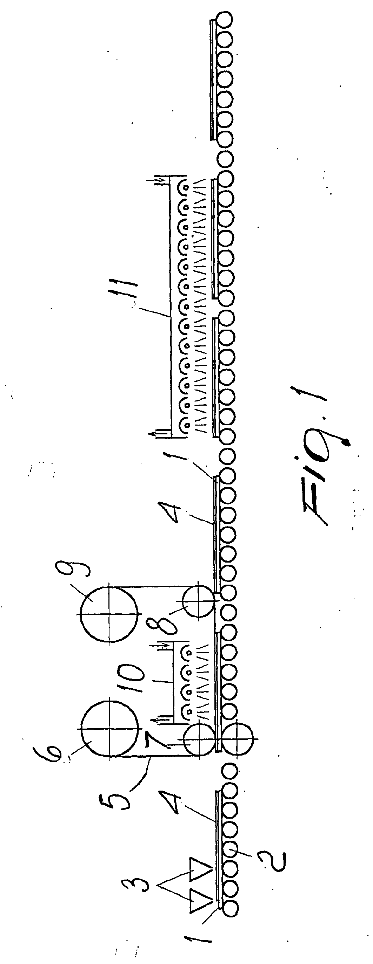

In Figure 1, the reference numeral 1 designates panels, which are made to advance on conveyor rollers 2. The reference numeral 3 designates heads of the curtain coating type (but such heads might be of another type), which distribute a layer of coating 4 on the panel. A removable matrix paper 5, on which the intended embossings are impressed, is then arranged on the fresh coating. The matrix paper unwinds from a roll 6, guided by rollers 7 and 8, and winds back onto a roll 9 to be recovered. Before removing the matrix paper, the panel is subjected to irradiation with ultraviolet (UV) light emitted by a source 10. The matrix paper, which is not completely opaque, allows the ultraviolet light to pass and therefore the coating partially hardens, so as to allow the subsequent removal of the matrix paper. The panel, no longer covered with the matrix paper that impressed the intended embossings, is then subjected again to the action of ultraviolet light, emitted by a second source 11, in order to achieve complete polymerization of the coating and its consequent hardening. The finished panel can then be unloaded.

In the case of transparent matrix paper, the complete polymerization of the coating can be obtained with the source 10 alone.

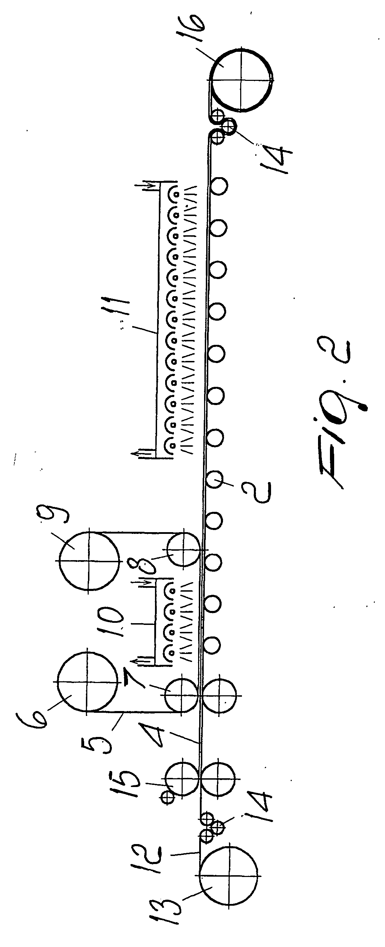

With the apparatus of Figure 2, embossing is performed, in a similar manner, on a thin film 12, which unwinds from a roll 13 drawn by rollers 14. The film is coated with a roller system 15 and, after the embossing treatment, is recovered in a roll 16.

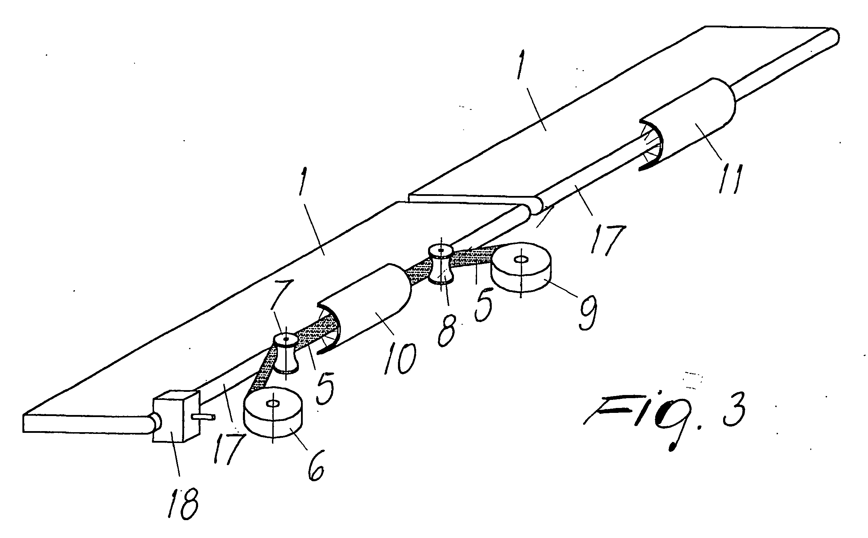

With the apparatus of Figure 3, the edges 17 of the panels 1 are treated. The coating is distributed on the shaped edges by means of a coating head 18. The method, which is unchanged, is performed with the same elements described above, but with a different shape. This treatment can be used on straight or shaped edges not only to form embossings but also to fill the cavities that form when milling panels made of chipboard or other low-value material, in order to obtain smooth edges ready for subsequent treatments, such as lacquer coating, transfer printing, or covering with papers or thin facing materials. In this case it is possible to use smooth release paper or the like.

In the same manner, it is possible to use the method to prepare the unfinished surfaces of panels of chipboard or other low-value materials in order to allow subsequent treatments (lacquer coating, transfer printing, covering with papers or thin facing materials, et cetera).

The resulting embossed surfaces can then be spray-lacquered or treated in any manner so as to obtain finished products that simulate realistically the natural essences of wood or other materials.

Another embodiment of the process, which does not allow to obtain the total transfer of the embossing of the matrix in all its beauty but can in any case produce significant embossing, is shown in Figures 4, 5, 6 and 7. In this case, the panel 1, or the film 12, is coated with a known system and the coated surface is then subjected to irradiation by means of a UV source 19. Irradiation and photoactivating agents are controlled so as to bring the resin to the gel state: in this step, the embossed finish is imparted by means of suitable pressure and then final irradiation is performed in order to harden the surface.

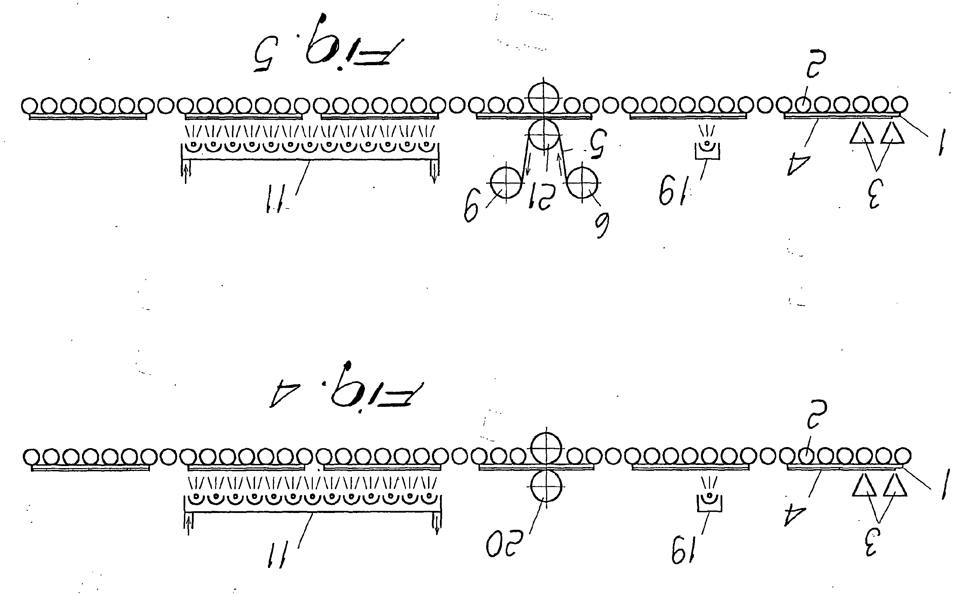

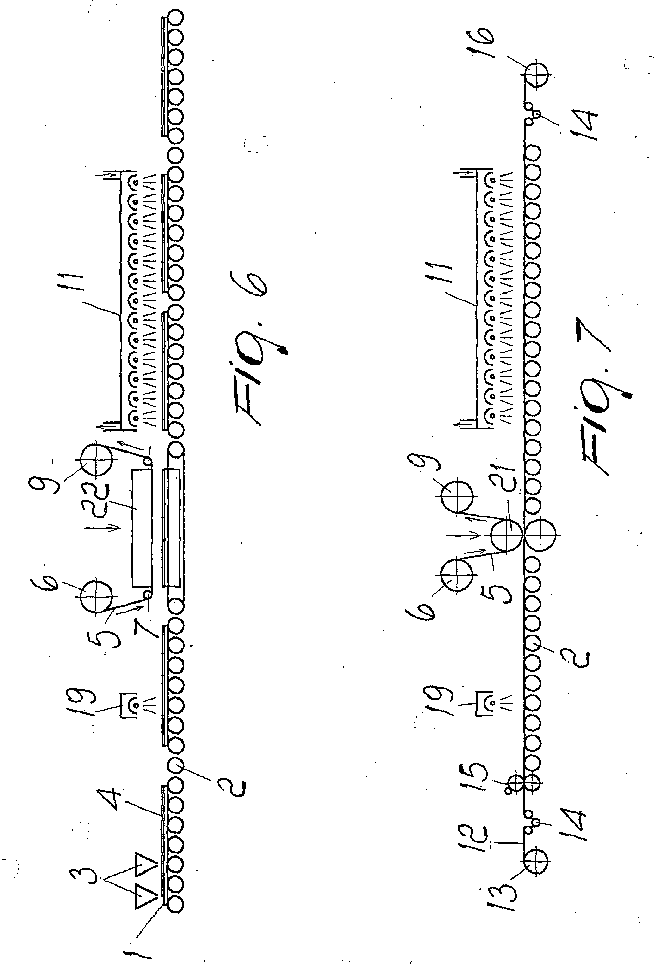

In Figure 4, the embossing on the coating in the gel state is impressed with a Teflon-coated matrix roller 20. In Figures 5 and 7 a matrix release paper 5 is used which is pressed by a smooth roller 21. In Figure 6, a smooth plate 22 with the matrix release paper 5 interposed is used. As an alternative, an engraved Teflon-coated plate might be used.

With the described method, other important advantages are achieved in addition to the initially specified ones: revaluation of expensive UV coating units, which are currently underused due to the diffusion of faced finished materials, such as plastic laminates; the possibility to create, with a method that is simple and not excessively expensive, new materials in roll form for continuous and discontinuous facing, with a higher surface resistance than low-pressure laminates (CPL) which, due to cost-related reasons, are currently produced without a protective layer; a surface that is insensitive to grease and dirt, particularly from hands, differently from CPL laminates and melamine faced components; elimination of the buffing step, with consequent saving of coating and lack of special waste to be disposed.

By using as a matrix the same film used for transfer printing, it is possible to achieve simultaneously the embossing of the coating and the transfer of the print, which remains embedded in the coating.

Another embodiment of the method can be provided by using other kinds of coating, such as polyester coatings, acrylic coatings, et cetera, with corresponding catalysts and activators (infrared rays, hot air, or sources of heat in general), with optional completion of drying in an oven.

Clearly, the nonessential constructive details might be different from the ones illustrated only by way of example without thereby abandoning the scope of the present invention.

## Claims

1. A method for obtaining embossing on coated surfaces of panels or films for cladding, said method comprises the steps of:
-- coating a surface to be treated with a UV coating;
-- coupling on the fresh coating a release element (5), which is transparent or not completely opacified;
-- irradiating the coated surface, through the release element, with ultraviolet light emitted from a source (10), until a partial hardening of the photochemical coating is achieved or its total hardening is achieved in the case of transparent matrices;
-- separating the matrix release paper (5), which leaves the intended impression on the partially or totally hardened surface;
-- fully polymerizing the lacquer, in the case of matrix paper that is not completely transparent, by subjecting the exposed embossed surface to further irradiation by means of a second UV source (11) said method is **characterized in that** the embossed surfaces are subsequently spray coated, so as to obtain finished products that simulate realistically the natural essences of wood or other materials.

2. The method according to claim 1, **characterized in that** said release element is a matrix release paper (5).

3. The method according to claim 2, **characterized in that** the matrix release paper is rewound into a roll and used several times for as long as it can be separated in a perfectly clean condition.

4. The method according to the preceding claims, **characterized in that** coating heads are used to distribute the coating.

5. The method according to the preceding claims, **characterized in that** said release element is smooth release paper.

## Patentansprüche

1. Verfahren zum Erhalten von Einprägungen auf beschichteten Paneel- oder Verkleidungsfilmoberflächen mit den folgenden Schritten:
- Versehen einer zu behandelnden Oberfläche mit einem UV-Überzug;
- Verbinden eines Trennelementes (5) mit dem frischen Überzug, das transparent oder nicht vollständig getrübt ist;
- Bestrahlen der beschichteten Oberfläche durch das Trennelement mit UV-Licht, das von einer Quelle (10) emittiert wird, bis eine partielle Aushärtung des fotochemischen Überzuges oder dessen vollständige Aushärtung im Falle von transparenten Matrixen erzielt wird;
- Trennen des Matrixtrennpapiers (5), das die gewünschte Einprägung auf der partiell oder vollständig ausgehärteten Oberfläche zurücklässt;
- vollständiges Polymerisieren des Lacks im Falle von nicht vollständig transparentem Matrixpapier durch weiteres Bestrahlen der freiliegenden geprägten Oberfläche mit Hilfe einer zweiten UV-Quelle (11);
- **dadurch gekennzeichnet, dass** die geprägten Oberflächen danach sprühbeschichtet werden, um fertige Produkte zu erhalten, die auf realistische Weise die natürlichen Essenzen von Holz und anderen Materialien simulieren.

2. Verfahren nach Anspruch 1, **dadurch gekennzeichnet, dass** das Trennelement ein Matrixtrennpapier (5) ist.

3. Verfahren nach Anspruch 2, **dadurch gekennzeichnet, dass** das Matrixtrennpapier wieder zu einer Rolle gewickelt und diverse Male benutzt wird, solange es in einem perfekten reinen Zustand getrennt werden kann.

4. Verfahren nach einem der vorangehenden Ansprüche, **dadurch gekennzeichnet, dass** zur Verteilung des Überzuges Beschichtungsköpfe verwendet werden.

5. Verfahren nach einem der vorangehenden Ansprüche, **dadurch gekennzeichnet, dass** das Trennelement glattes Trennpapier ist.

## Revendications

1. Procédé pour gaufrer des surfaces revêtues de panneaux ou films de placage, ledit procédé comprenant les étapes consistant à :
- revêtir une surface destinée à être traitée avec un revêtement UV ;
- coupler sur le revêtement frais un élément de décollage (5), qui est transparent ou non complètement opacifié ;
- irradier la surface revêtue, à travers l'élément de décollage, avec de la lumière ultraviolette émise à partir d'une source (10), jusqu'à ce qu'un durcissement partiel du revêtement photochimique soit obtenu ou son durcissement total soit obtenu dans le cas de matrices transparentes ;
- séparer le papier de décollage pour matrice (5), qui laisse l'impression voulue sur la surface partiellement ou totalement durcie ;
- polymériser complètement la laque, dans le cas de papier pour matrice qui n'est pas complètement transparent, en soumettant la surface gaufrée exposée à une irradiation supplémentaire au moyen d'une seconde source UV (11) ;
ledit procédé est **caractérisé en ce que** les surfaces gaufrées sont par la suite revêtues par pulvérisation, afin d'obtenir des produits finis qui simulent de façon réaliste les essences naturelles de bois ou autres matériaux.

2. Procédé selon la revendication 1, **caractérisé en ce que** ledit élément de décollage est un papier de décollage pour matrice (5).

3. Procédé selon la revendication 2, **caractérisé en ce que** le papier de décollage pour matrice est rembobiné en un rouleau et utilisé plusieurs fois aussi longtemps qu'il peut être séparé dans une condition parfaitement propre.

4. Procédé selon les revendications précédentes, **caractérisé en ce que** des têtes de revêtement sont utilisées pour distribuer le revêtement.

5. Procédé selon les revendications précédentes, **caractérisé en ce que** ledit élément de décollage est un papier de décollage lisse.
